(19) Europäisches Patentamt
European Patent Office
Office européen des brevets

(11) EP 4 050 585 A1

(12) EUROPEAN PATENT APPLICATION

(43) Date of publication:
**31.08.2022 Bulletin 2022/35**

(21) Application number: **22155181.5**

(22) Date of filing: **04.02.2022**

(51) International Patent Classification (IPC):
***G08G 5/00*** ***(2006.01)*** ***G05D 1/06*** ***(2006.01)***
***G08G 5/02*** ***(2006.01)***

(52) Cooperative Patent Classification (CPC):
**G08G 5/0021; G05D 1/0676; G08G 5/025**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.02.2021 IN 202111007737**
**08.04.2021 US 202117225387**

(71) Applicant: **Honeywell International Inc.**
**Charlotte, NC 28202 (US)**

(72) Inventors:
- **SURE, Ambika**
  **Charlotte, 28202 (US)**
- **N, Chethan**
  **Charlotte, 28202 (US)**
- **CHAUBEY, Rajesh**
  **Charlotte, 28202 (US)**
- **KULAL, Roopa Niveditha Sundara**
  **Charlotte, 28202 (US)**
- **SWAIN, Soumitri**
  **Charlotte, 28202 (US)**
- **RAMACHANDRA, Sripathi**
  **Charlotte, 28202 (US)**

(74) Representative: **LKGlobal UK Ltd.**
**Cambridge House**
**Henry Street**
**Bath BA1 1BT (GB)**

(54) **METHODS, AND SYSTEMS FOR ENABLING EFFECTIVE MODELING OF LANDING GEAR FOR ENERGY MANAGEMENT**

(57) Methods and systems are provided for guiding or otherwise assisting energy management of an aircraft en route to a runway. A method to optimize managing energy of an aircraft in a landing trajectory when deploying landing gear, the system including evaluating an energy state for the aircraft for a set of flight trajectories including a lateral and a vertical trajectory for a flight path in an approach phase to a runway; identifying at least one energy state for the aircraft based on a set of formulated computations based on an altitude and speed of a vertical aircraft profile on the flight path in the approach phase; and assessing in an envelope region a landing gear extension to manage the excess energy at a prediction location in the flight path; and deploy the landing gear responsive to an assessed change in the aircraft energy state in route to the runway.

1205
Energy Dissipation Predictor
1210
Identify Energy State
1215
No
Is Excess Energy?
Yes
1220
Identify Landing Gear Envelope Region
1230
No
Is Predicted Speed <= VLE and/or MLE?
Yes
1235
Evaluate Decelerate Rate Strategies "Whether LG Extension Required at Current Prediction Postion or CONFx"
1240
Evaluate Descent Gradient Per Decelerate Rate Strategies or Constant Speed
1245
Model LG Per the Identified Decelarate Rate & Descent Gradient Strategies
1250
Predict Vertical Trajectory
1255
Is End of Plan?
No
Yes
1260
Stop

FIG. 12



Processed by Luminess, 75001 PARIS (FR)

## Description

CROSS REFERENCE TO RELATED APPLICATION

The present application claims benefit of prior filed Indian Provisional Patent Application No. 202111007737, filed February 24, 2021, which is hereby incorporated by reference herein in its entirety.

TECHNICAL FIELD

The subject matter described herein relates generally to vehicle methods, and systems, and more particularly, embodiments of the subject matter relate to aircraft systems capable of facilitating an efficient approach to an airport while managing an aircraft energy situation of a changing state caused in part by aircraft landing gear extension at a prediction location during the aircraft approach.

BACKGROUND

Often, it is desirable to operate an aircraft in accordance with a stabilized approach when close to the airport (e.g., within a few miles and aligned with the runway) to land safely. The stabilized approach is generally defined in terms of a number of specific criteria, which may be set forth by a safety organization, a standards organization or other regulatory body, an airline, an aircraft manufacturer, or the like. Achieving a stabilized approach can be a challenging task, especially in certain circumstances such as adverse weather conditions, onboard malfunctions, low quality of air traffic control (ATC), bad crew cooperation, fatigue, visual illusions, inexperienced crew members, and the like. Modern autopilot and/or flight management systems often leverage defined approach procedures to facilitate a stable approach.

A stabilized approach can be affected by a pilot's ability to manage an aircraft's energy state (keeping it within normal parameters) during an approach. In an un-stabilized approach with excess energy or not enough energy, a variety of landing incidents may occur such as hard landing, tail strikes, runway overruns, or undershoots. During an approach, the pilot of flight crew must maintain an appropriate energy state of the aircraft that requires balancing the aircraft's airspeed, thrust, drag, and flight path in the approach.

The observed extension and retraction speeds (i.e., maximum landing gear operating speed (VLO)), the speed with the maximum landing gear extended speed (VLE) or speed with the landing gear extended and locked are often quite different during the approach and landing. The VLO is normally observed lower than the VLE because there is a limitation in the speed that affects both the landing gearing (when not deployed or about to be deployed) in flight and the speed once the landing gear is deployed and locked (i.e., in the latter case the aircraft can speed up). The different approach speeds for the aircraft can be caused by sequenced gear door operation for the deployment of landing gear in which the landing gear doors are only open during the extension and retraction cycle or limitations in the operation of the aircraft's hydraulic systems to retract. For example, the nose gear operations can be affected by air loads and the imparted speed limitation to nose gear deployment can cause approach stability and control issues.

During the approach and landing operation an early extension of the Landing Gear (LG) can be deployed if needed so long as the aircraft is operating below VLE/VLO (Maximum/Operating speed of Knots in Calibrated Air Speed (KT-CAS) for LG extended) or the aircraft is operating at an MLE/MLO (Maximum/Operating Mach for Landing Gear extended). The deployment of the landing gear can help cause the aircraft to decelerate. This is because the additional drag of the landing gear can cause a strong effect on the aircraft deceleration rate. The LG extension impacts performance speed protections and active speed protections via Maximum operating limit speeds to turboprops or jets (VMO/ MMO) (depends on original equipment manufacturer's (OEM's) specification), and this entails the pilot use of the LGto decelerated requiring considering multiple factors. For example, the LG can be extended during approach when the aircraft is operated in clean flap configuration or approach flap configuration, and once extended, the LG is required to remain extended till the end of the landing procedure (as defined in the standard operating procedure).

It is desirable to provide modeling for the pilot of the multiple factors to convenient consider in the deployment of LG along with using multiple strategies in the LG deployment for facilitating a more efficient approach to control the aircraft's energy state on the approach.

Furthermore, other desirable features and characteristics of the present disclosure will become apparent from the subsequent detailed description and the appended claims, taken in conjunction with the accompanying drawings and the foregoing technical field and background.

BRIEF SUMMARY

Methods and systems are provided for assisting the energy management of an aircraft.

In at least one exemplary embodiment, a method to optimize managing energy of an aircraft in a landing trajectory when deploying landing gear is provided.

In at least one exemplary embodiment, the method includes evaluating an energy state for the aircraft for a set of flight trajectories, the set of flight trajectories includes at least one of a lateral and a vertical trajectory for a flight path in an approach phase to a runway; identifying at least one energy state for the aircraft based on a set of formulated computations based on an altitude and speed of a vertical aircraft profile on the flight path in the approach phase; in response to computing excess energy of at least one energy state for the aircraft based on a set of energy dissipation predictors for a selected aircraft trajectory, assessing in an envelope region a landing gear extension to manage excess energy at a prediction location in the flight path; and deploying, landing gear in accordance with the assessment to manage the excess energy at the prediction in the flight path in the approach phase to the runway.

In at least one exemplary embodiment, the method includes in response to determining that a predicted speed is either at least less than a maximum landing gear extension speed or at an operating aircraft speed at the prediction location, evaluating at least one strategy of a plurality of strategies for the landing gear extension for a selected evaluation point.

In at least one exemplary embodiment, the method includes evaluating a first strategy based on a computed decelerate rate and a descent gradient of the aircraft on the flight path with the landing gear extension at the selected evaluation point.

In at least one exemplary embodiment, the method includes evaluating a second strategy on the descent gradient with a constant speed for the aircraft on the flight path with the landing gear extension at the selected evaluation point.

In at least one exemplary embodiment, the method includes generating a model for the landing gear extension by the computed decelerate rate and the first strategy at an evaluation location; and upon establishing that the predicted speed is either at least less than a maximum landing gear extension speed or at an operating aircraft speed for the prediction position, predicting a vertical trajectory for the landing gear extension in the flight path at the selected evaluation point.

In at least one exemplary embodiment, the method includes generating a model for a vertical trajectory of the aircraft with an immediate landing gear extension at the prediction location wherein the immediate landing gear extension can cause a shallower gradient for the vertical trajectory than a reference gradient for the vertical trajectory that has a computed deceleration rate using the first strategy with a greater decelerate rate than a current deceleration rate.

In at least one exemplary embodiment, the method includes generating modeling for a down path trajectory with a landing gear extension at the prediction location wherein the down path trajectory includes a steeper gradient of a trajectory than a reference gradient of the trajectory with a deceleration rate using the first strategy with a lesser decelerate rate than a current deceleration rate.

In at least one exemplary embodiment, a system includes a computer-readable medium having computer-executable instructions stored thereon that, when executed by a processing system, cause the processing system to: obtain, from one or more systems onboard an aircraft, a current situation of the aircraft; compare the current situation of the aircraft to a predicted trajectory for the aircraft to a runway and a reference trajectory for the aircraft to the runway; evaluate an energy state for the aircraft for a set of trajectories including at least one of a lateral and a vertical trajectory to the runway; assess at least one energy state for the aircraft based on a set of formulated computations based on an altitude and speed of a vertical aircraft profile based on the current situation and an aircraft trajectory in route to the runway; compute excess energy of at least one energy state for the aircraft based on a set of energy dissipation predictors for a selected aircraft trajectory; identify an envelope region for a landing gear extension and assess a change in an aircraft energy state at a prediction location in route to the runway; and in response to an identified envelope region for the landing gear extension, deploy an aircraft's landing gear at the prediction location to respond to an assessed change in the aircraft energy state in route to the runway.

In at least one exemplary embodiment, a system that includes the computer-readable medium when executed by a processing system, cause the processing system to determine a predicted speed of the aircraft at the current situation that is either at least less than a maximum landing gear extension speed or at an operating aircraft speed at the prediction location; and evaluate at least one strategy of a plurality of strategies for the landing gear extension for a selected evaluation point based on a determined predicted speed.

In at least one exemplary embodiment, a system that includes the computer-readable medium when executed by a processing system, cause the processing system to evaluate a first strategy based on a computed decelerate rate and a descent gradient of the aircraft on a flight path with the landing gear extension at the selected evaluation point.

In at least one exemplary embodiment, a system that includes the computer-readable medium when executed by a processing system, causes the processing system to generate a model for the landing gear extension based on the computed decelerate rate and the first strategy at an evaluation location.

In at least one exemplary embodiment, a system that includes the computer-readable medium when executed by a processing system, cause the processing system to determine a predicted speed is either at least less than a maximum landing gear extension speed or at an operating aircraft speed for the prediction position, and predict a vertical trajectory for the landing gear extension in the flight path at the selected evaluation point.

In at least one exemplary embodiment, a system that includes the computer-readable medium when executed by a processing system, cause the processing system to generate a model for a vertical trajectory of the aircraft with an immediate landing gear extension at the prediction location wherein the immediate landing gear extension can result in a shallower gradient for the vertical trajectory than a reference gradient for the vertical trajectory that has a computed deceleration rate using the first strategy with a greater decelerate rate than a current deceleration rate.

In at least one exemplary embodiment, a system that includes the computer-readable medium when executed by a processing system, cause the processing system to generate modeling for a down path trajectory with a landing gear extension at the prediction location wherein the down path trajectory includes a steeper gradient of a trajectory than a reference gradient of the trajectory with a deceleration rate using the first strategy with a lesser decelerate rate than a current deceleration rate.

In at least one exemplary embodiment, an aircraft system that includes a display device; a data storage element to maintain prediction location criteria; a navigation system to provide a current location of an aircraft and a current heading of the aircraft; a processing system coupled to the display device, the data storage element, and the navigation system that is configured to manage the energy state for aircraft is provided.

In at least one exemplary embodiment, an aircraft system is configured to: evaluate an energy state for the aircraft for a set of trajectories including at least one of a lateral and a vertical trajectory in route to the runway; assess at least one energy state for the aircraft based on a set of formulated computations based on an altitude and speed of a vertical aircraft profile and an aircraft trajectory in route to the runway; compute excess energy of at least one energy state for the aircraft based on a set of energy dissipation predictors for a selected aircraft trajectory; identify an envelope region for a landing gear extension and assess a change in an aircraft energy state at a prediction location displayed in the display device in a flight path in route to the runway; and in response to an identified envelope region for the landing gear extension, deploy an aircraft's landing gear at the prediction location to respond to an assessed change in the aircraft energy state in route to the runway.

In at least one exemplary embodiment, an aircraft system is configured to: in response to determining that a predicted speed is either at least less than a maximum landing gear extension speed or at an operating aircraft speed at the prediction location, evaluate at least one strategy of a plurality of strategies for the landing gear extension for a selected evaluation point.

In at least one exemplary embodiment, an aircraft system is configured to: evaluate a first strategy based on a computed decelerate rate and a descent gradient of the aircraft on the flight path with the landing gear extension at the selected evaluation point.

In at least one exemplary embodiment, an aircraft system is configured to: evaluate a first strategy based on a computed decelerate rate and a descent gradient of the aircraft on the flight path with the landing gear extension at the selected evaluation point.

In at least one exemplary embodiment, an aircraft system is configured to: evaluate a second strategy on the descent gradient with a constant speed for the aircraft on the flight path with the landing gear extension at the selected evaluation point.

In at least one exemplary embodiment, an aircraft system is configured to: generate a model for the landing gear extension by the computed decelerate rate and the first strategy at an evaluation location; and upon establishing that the predicted speed is either at least less than a maximum landing gear extension speed or at an operating aircraft speed for the prediction position, predict a vertical trajectory for the landing gear extension in the flight path at the selected evaluation point.

BRIEF DESCRIPTION OF THE DRAWINGS

Embodiments of the subject matter will hereinafter be described in conjunction with the following drawing figures, wherein like numerals denote like elements, and:

FIG. 1 is a block diagram of a system for an aircraft for use in managing the energy state of the aircraft on approach in accordance with an exemplary embodiment;

FIGS. 2A and 2B depict an exemplary scenario of an aircraft in flight with a lateral route and vertical trajectory from a current aircraft location to the desired runway in accordance with an exemplary embodiment;

FIGS. 3A and 3B depict exemplary scenarios depicted of early or non-optimal extension of the LG causes an abnormal energy situation in accordance with an exemplary embodiment;

FIG. 4 depicts a reference vertical trajectory to a runway where the aircraft comes in too high and exemplary modeling of the LG deployment in this scenario with applicable constraints in accordance with an exemplary embodiment;

FIG. 5 depicts exemplary modeling of landing gear in a scenario of the 1000 ft AGL stabilization altitude that is used as a reference point in accordance with an embodiment;

FIGS. 6A and 6B depict exemplary modeling of landing gear (LG) with the LG strategy 1 of a landing gear extension within a region and up the path of landing slats and flap configuration (CONFx) in accordance with an exemplary embodiment;

FIGS. 7A and 7B depict exemplary modeling of landing gear (LG) with the LG strategy 2 of a landing gear extension within a region and down path in accordance with an exemplary embodiment;

FIGS. 8A and 8B illustrate exemplary modeling of landing gear (LG) with the LG only altitude (ALT) capture of landing gear extension within a region and down path in accordance with an exemplary embodiment;

FIGS. 9A and 9B depict exemplary modeling of landing gear (LG) with effective and optimal LG extension and a case 1 of an approach stabilization gate adherence in accordance with an exemplary embodiment;

FIGS. 10A and 10B depict exemplary modeling of landing gear (LG) with effective and optimal LG extension and case 2 of final approach fix (FAF) ALT adherence in accordance with an exemplary embodiment;

FIGS. 11A and 11B depict exemplary modeling of landing gear (LG) with effective and optimal LG extension and a case 3 of pilot navigation display (ND) interactivity in accordance with an exemplary embodiment; and

FIG. 12 depicts an exemplary method of managing the energy of an aircraft in a landing trajectory when deploying landing gear in accordance with an embodiment.

DETAILED DESCRIPTION

Embodiments of the subject matter described herein generally relate to systems and methods for managing the energy of a vehicle en route to a destination. While the subject matter described herein could be utilized in various applications or the context of various types of vehicles (e.g., automobiles, marine vessels, trains, or the like), exemplary embodiments are described herein in the context of an aircraft that is en route to an airport along a heading assigned by air traffic control (ATC), for example, in accordance with radar vectoring or other traffic management procedures or protocols.

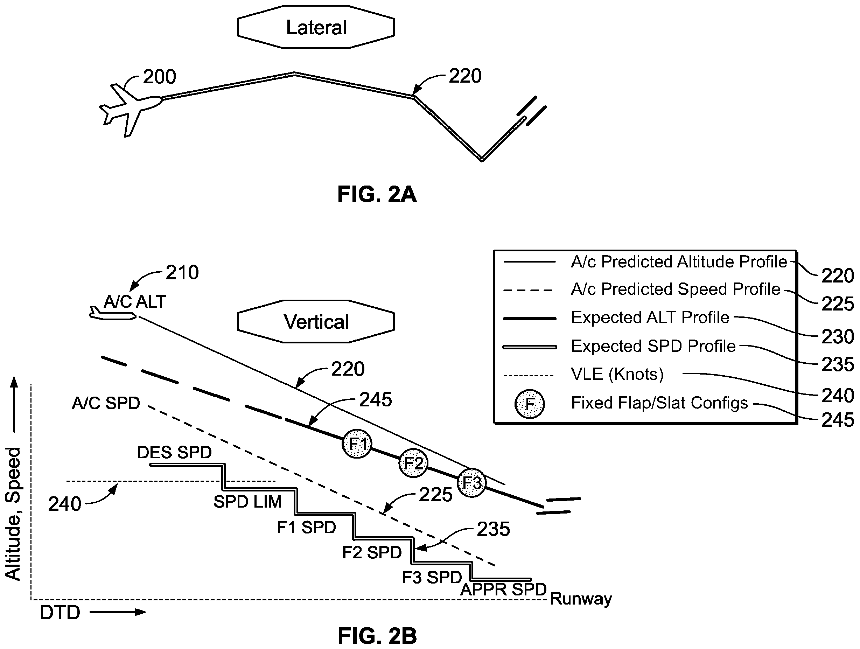

As described in greater detail below primarily in the context of FIGS. 2-12, an anticipated energy state for approaching the runway from a prediction location of the aircraft given the currently assigned heading is determined in accordance with one or more strategies.

The flight crews in an approach generally follow an approach stabilization criterion instructed in a standard operating procedure, and in following this procedure excess speed and energy state management is usually a component that is instilled. The pilot can extend LG early to decelerate the aircraft but this operation should not occur until the aircraft has entered into an under speed and/or low energy situation. Therefore, the pilot with assistance by an onboard system can be provided with planned and strategic ways of handling the aircraft's energy situation that is occurring in a changing state and therefore can more efficiently manage the aircraft approach with the use of the Landing Gear (LG) extension within VLE/MLE (or VLO/MLO) conditions.

In the various exemplary embodiment, the present disclosure describes systems and methods that enable the aircraft's flight management systems, and other computing devices with user interfaces to generate a predicted lateral vectoring trajectory, a corresponding reference vertical trajectory for that predicted lateral vectoring trajectory is determined using one or more energy management criteria associated with the runway. For example, this can include any existing or applicable minimum and/or maximum altitude constraints associated with the final approach fix (FAF) for the runway, any existing or applicable minimum and/or maximum airspeed constraints associated with the FAF, any existing or applicable minimum and/or maximum descent rate associated with the FAF, and/or the like to evaluate the energy state to proceed on a flight path and speed for landing at the desired energy.

In the various exemplary embodiments, the present disclosure describes systems and methods that enable the aircraft's flight management systems to carry out processes to compute energy states during an approach at a prediction point. The computations may be based on aircraft parameters such as altitude and speed associated with a vertical profile.

In various exemplary embodiment, the present disclosure describes systems and methods that enable the aircrafts flight management systems to execute modeling scenarios of Landing Gear extensions to identify an effective/optimal location for excess energy state management at prediction locations that include identifying an applicable landing gear envelope at an aircraft location, at a waypoint or at a prediction intervals, computing deceleration rate strategies within an associated LG envelope region, evaluating deceleration rates strategies for effective/optimal LG extension modelling, computing descent gradient based on identified deceleration rate strategies or constant speed rule within the LG envelope region, evaluating descent gradient strategies for effective/optimal LG extension modelling, producing effective/optimal LG extension location based on identified strategies, allowing navigation display and vertical display interactivity for the crew to be able to graphically select (or enter via an flight management system input page), a reference point to determine the energy state management that would happen by a LG extension within a permissible envelope or region for LG extensions, and providing effective/optimal LG extension that are deemed materially indicative for display on ND/VD/PFD/MCDU/MFD/PED or other display system.

In this regard, various embodiments may include any number or type of energy management criteria, such as one or more of the stabilization criteria described in U.S. Patent Publication No. 2013/0218374, including, but not limited to, the desired target speed or the desired range of speeds upon reaching a stabilization target point, a threshold descent rate upon reaching a stabilization target point, a particular aircraft configuration upon reaching a stabilization target point, a particular aircraft power setting upon reaching a stabilization target point, etc. The reference vertical trajectory represents the recommended altitudes and speeds for the aircraft to observe while flying the predicted lateral vectoring trajectory to facilitate a stable approach and/or landing.

In this regard, display systems described in U.S. Patent No. 9,646,503 B2 entitled: "Cockpit display system and method for generating navigation displays including landing diversion symbology", and U.S. Patent No. 10,654,589 B2 entitled: "Avionic display systems and methods for generating vertical situation displays including instability prediction and avoidance symbology may be used for generating various scenarios, predictions and strategies for evaluating aircraft energy states on approach paths with landing gear extensions executed.

Once a predicted lateral vectoring trajectory and corresponding reference vertical trajectory are determined, a target value may be calculated or otherwise determined for one or more energy state parameters of the aircraft at the aircraft's current location along the lateral vectoring trajectory using the reference vertical trajectory.

In this regard, based on the reference vertical trajectory, a target altitude value and/or a target airspeed value may be determined as the altitude and/or airspeed specified by the reference vertical trajectory at the aircraft's current distance from the runway (or FAF) along the reference vertical trajectory. By virtue of the reference vertical trajectory being constructed in accordance with energy management criteria associated with the runway, the target energy state parameter value represents a value for a respective energy state parameter at the current location or prediction location of the aircraft that is likely to result in the aircraft satisfying one or more downstream criteria for that energy state parameter (e.g., a minimum and/or maximum value for that energy state parameter at the FAF), that is, the target value is aligned with the expected speed and altitude to be followed for a stable approach and landing at a given aircraft location on the predicted lateral vectoring trajectory according to the reference vertical trajectory.

Based on a difference or deviation between the current or real-time value for an energy state parameter and the target value dictated by the reference vertical trajectory, one or more remedial actions for reducing the difference may be determined and a corresponding graphical indicium of such recommended action(s) may be provided (e.g., on a display device or via another user interface onboard the aircraft). In this manner, the pilot of a radar vectored aircraft is provided with guidance for how to manage the current energy state of the aircraft while traveling along with an assigned heading.

AIRCRAFT SYSTEM OVERVIEW

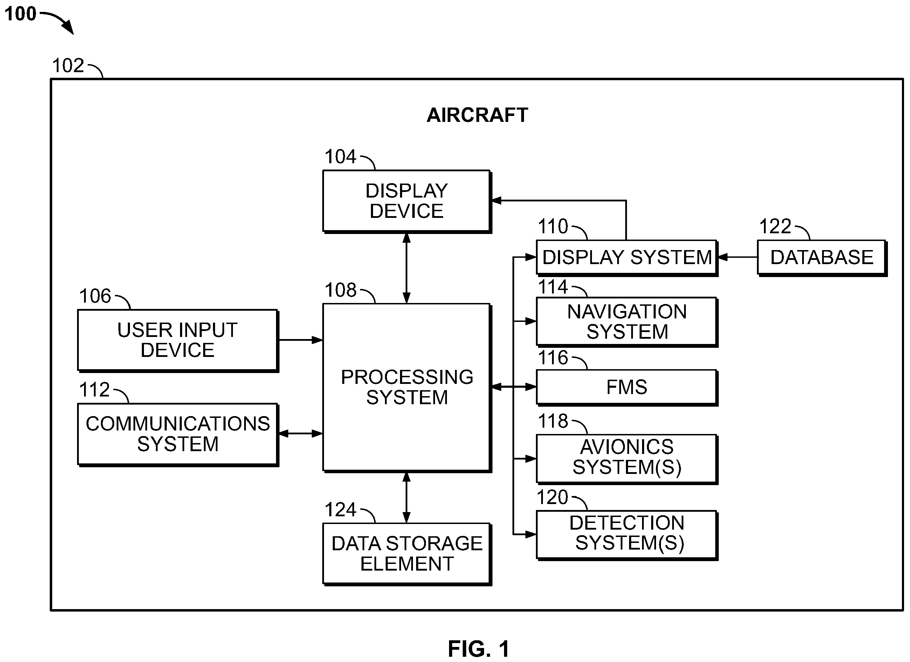

Referring now to FIG. 1, an exemplary embodiment of a system 100 which may be located onboard a vehicle, such as an aircraft 102, includes, without limitation, a display device 104, a user input device 106, a processing system 108, a display system 110, a communications system 112, a navigation system 114, a flight management system (FMS) 116, one or more avionics systems 118, one or more detection systems 120, and one or more data storage elements 122, 124 cooperatively configured to support the operation of the system 100, as described in greater detail below.

In exemplary embodiments, the display device 104 is realized as an electronic display capable of graphically displaying flight information or other data associated with the operation of the aircraft 102 under control of the display system 110 and/or processing system 108. In this regard, the display device 104 is coupled to the display system 110 and the processing system 108, wherein the processing system 108 and the display system 110 are cooperatively configured to display, render, or otherwise convey one or more graphical representations or images associated with the operation of the aircraft 102 on the display device 104.

The user input device 106 is coupled to the processing system 108, and the user input device 106 and the processing system 108 are cooperatively configured to allow a user (e.g., a pilot, co-pilot, or crew member) to interact with the display device 104 and/or other elements of the aircraft system 100, as described in greater detail below.

Depending on the embodiment, the user input device 106 may be realized as a keypad, touchpad, keyboard, mouse, touch panel (or touchscreen), joystick, knob, line select key, or another suitable device adapted to receive input from a user. In some embodiments, the user input device 106 is realized as an audio input device, such as a microphone, audio transducer, audio sensor, or the like, that is adapted to allow a user to provide audio input to the aircraft system 100 in a "hands-free" manner without requiring the user to move his or her hands, eyes and/or head to interact with the aircraft system 100.

The processing system 108 generally represents the hardware, circuitry, processing logic, and/or other components configured to facilitate communications and/or interaction between the elements of the aircraft system 100 and perform additional processes, tasks, and/or functions to support the operation of the aircraft system 100, as described in greater detail below. Depending on the embodiment, the processing system 108 may be implemented or realized with a general-purpose processor, a controller, a microprocessor, a microcontroller, a content addressable memory, a digital signal processor, an application-specific integrated circuit, a field-programmable gate array, any suitable programmable logic device, discrete gate or transistor logic, processing core, discrete hardware components, or any combination thereof, designed to perform the functions described herein. In practice, the processing system 108 includes processing logic that may be configured to carry out the functions, techniques, and processing tasks associated with the operation of the aircraft system 100 described in greater detail below. Furthermore, the steps of a method or algorithm described in connection with the embodiments disclosed herein may be embodied directly in hardware, in firmware, in a software module executed by the processing system 108, or in any practical combination thereof. In accordance with one or more embodiments, the processing system 108 includes or otherwise accesses a data storage element 124, such as a memory (e.g., RAM, ROM memory, flash memory, registers, a hard disk, or the like) or another suitable non-transitory short or long term storage media capable of storing computer-executable programming instructions or other data for execution that, when read and executed by the processing system 108, cause the processing system 108 to execute and perform one or more of the processes, tasks, operations, and/or functions described herein.

The display system 110 generally represents the hardware, firmware, processing logic, and/or other components configured to control the display and/or rendering of one or more displays pertaining to the operation of the aircraft 102 and/or systems 112, 114, 116, 118, 120 on the display device 104 (e.g., synthetic vision displays, navigational maps, and the like). In this regard, the display system 110 may access or include one or more databases 122 suitably configured to support operations of the display system 110, such as, for example, a terrain database, an obstacle database, a navigational database, a geopolitical database, a terminal airspace database, a special use airspace database, or other information for rendering and/or displaying navigational maps and/or other content on the display device 104. In this regard, in addition to including a graphical representation of terrain, a navigational map displayed on the display device 104 may include graphical representations of navigational reference points (e.g., waypoints, navigational aids, distance measuring equipment (DMEs), very highfrequency omnidirectional radio ranges (VORs), and the like), designated special use airspaces, obstacles, and the like overlying the terrain on the map.

As described in greater detail below, in an exemplary embodiment, the processing system 108 includes or otherwise accesses a data storage element 124 (or database), which maintains information regarding airports and/or other potential landing locations (or destinations) for the aircraft 102. In this regard, the data storage element 124 maintains an association between a respective airport, its geographic location, runways (and their respective orientations and/or directions), instrument procedures (e.g., approaches, arrival routes, and the like), airspace restrictions, and/or other information or attributes associated with the respective airport (e.g., widths and/or weight limits of taxi paths, the type of surface of the runways or taxi path, and the like). Additionally, in some embodiments, the data storage element 124 also maintains status information for the runways and/or taxi paths at the airport indicating whether or not a particular runway and/or taxi path is currently operational along with directional information for the taxi paths (or portions thereof). The data storage element 124 may also be utilized to store or maintain other information pertaining to the airline or aircraft operator (e.g., airline or operator preferences, etc.) along with information pertaining to the pilot and/or co-pilot of the aircraft (e.g., pilot preferences, experience level, licensure, or other qualifications, etc.).

Still referring to FIG. 1, in an exemplary embodiment, the processing system 108 is coupled to the navigation system 114, which is configured to provide real-time navigational data and/or information regarding the operation of the aircraft 102. The navigation system 114 may be realized as a global positioning system (GPS), inertial reference system (IRS), or a radio-based navigation system (e.g., VHF Omni-directional radio range (VOR) or long-range aid to navigation (LORAN)), and may include one or more navigational radios or other sensors suitably configured to support the operation of the navigation system 114, as will be appreciated in the art. The navigation system 114 is capable of obtaining and/or determining the instantaneous position of the aircraft 102, that is, the current (or instantaneous) location of the aircraft 102 (e.g., the current latitude and longitude) and the current (or instantaneous) altitude (or above ground level) for the aircraft 102. The navigation system 114 is also capable of obtaining or otherwise determining the heading of the aircraft 102 (i.e., the direction the aircraft is traveling in relative to some reference).

In an exemplary embodiment, the processing system 108 is also coupled to the FMS 116, which is coupled to the navigation system 114, the communications system 112, and one or more additional avionics systems 118 to support navigation, flight planning, and other aircraft control functions conventionally, as well as to provide real-time data and/or information regarding the operational status of the aircraft 102 to the processing system 108. It should be noted that although FIG. 1 depicts a single avionics system 118, in practice, the aircraft system 100 and/or aircraft 102 will likely include numerous avionics systems for obtaining and/or providing real-time flight-related information that may be displayed on the display device 104 or otherwise provided to a user (e.g., a pilot, a co-pilot, or crew member). For example, practical embodiments of the aircraft system 100 and/or aircraft 102 will likely include one or more of the following avionics systems suitably configured to support the operation of the aircraft 102: a weather system, an air traffic management system, a radar system, a traffic avoidance system, an autopilot system, an auto thrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

In the illustrated embodiment, the onboard detection system(s) 120 generally represents the component(s) of the aircraft 102 that is coupled to the processing system 108 and/or the display system 110 to generate or otherwise provide information indicative of various objects or regions of interest within the vicinity of the aircraft 102 that are sensed, detected, or otherwise identified by a respective onboard detection system 120. For example, an onboard detection system 120 may be realized as a weather radar system or other weather sensing system that measures, senses, or otherwise detects meteorological conditions in the vicinity of the aircraft 102 and provides corresponding radar data (e.g., radar imaging data, range setting data, angle setting data, and/or the like) to one or more of the other onboard systems 108, 110, 114, 116, 118 for further processing and/or handling. For example, the processing system 108 and/or the display system 110 may generate or otherwise provide graphical representations of the meteorological conditions identified by the onboard detection system 120 on the display device 104 (e.g., on or overlying a lateral navigational map display). In another embodiment, an onboard detection system 120 may be realized as a collision-avoidance system that measures, senses, or otherwise detects air traffic, obstacles, terrain, and/or the like in the vicinity of the aircraft 102 and provides corresponding detection data to one or more of the other onboard systems 108, 110, 114, 116, 118.

In the illustrated embodiment, the processing system 108 is also coupled to the communications system 112, which is configured to support communications to and/or from aircraft 102 via a communications network. For example, the communications system 112 may also include a data link system or another suitable radio communication system that supports communications between the aircraft 102 and one or more external monitoring systems, air traffic control, and/or another command center or ground location. In this regard, the communications system 112 may allow the aircraft 102 to receive information that would otherwise be unavailable to the pilot and/or co-pilot using the onboard systems 114, 116, 118, 120. For example, the communications system 112 may receive meteorological information from an external weather monitoring system, such as a Doppler radar monitoring system, a convective forecast system (e.g., a collaborative convective forecast product (CCFP), or national convective weather forecast (NCWF) system), an infrared satellite system, or the like, that is capable of providing information pertaining to the type, location and/or severity of precipitation, icing, turbulence, convection, cloud cover, wind shear, wind speed, lightning, freezing levels, cyclonic activity, thunderstorms, or the like along with other weather advisories, warnings, and/or watches. The meteorological information provided by an external weather monitoring system may also include forecast meteorological data that is generated based on historical trends and/or other weather observations and may include forecasted meteorological data for geographical areas that are beyond the range of any weather detection systems 120 onboard the aircraft 102. In other embodiments, the processing system 108 may store or otherwise maintain historic meteorological data previously received from an external weather monitoring system, with the processing system 108 calculating or otherwise determining forecast meteorological for geographic areas of interest to the aircraft 102 based on the stored meteorological data and the current (or most recently received) meteorological data from the external weather monitoring system. In this regard, the meteorological information from the external weather monitoring system may be operationally used to obtain a "big picture" strategic view of the current weather phenomena and trends in its changes in intensity and/or movement with respect to the prospective operation of the aircraft 102.

It should be understood that FIG. 1 is a simplified representation of the aircraft system 100 for purposes of explanation and ease of description, and FIG. 1 is not intended to limit the application or scope of the subject matter described herein in any way. It should be appreciated that although FIG. 1 shows the display device 104, the user input device 106, and the processing system 108 as being located onboard the aircraft 102 (e.g., in the cockpit), in practice, one or more of the display device 104, the user input device 106, and/or the processing system 108 may be located outside the aircraft 102 (e.g., on the ground as part of an air traffic control center or another command center) and communicatively coupled to the remaining elements of the aircraft system 100 (e.g., via a data link and/or communications system 112). In this regard, in some embodiments, the display device 104, the user input device 106, and/or the processing system 108 may be implemented as an electronic flight bag that is separate from the aircraft 102 but capable of being communicatively coupled to the other elements of the aircraft system 100 when onboard the aircraft 102. Similarly, in some embodiments, the data storage element 124 may be located outside aircraft 102 and communicatively coupled to the processing system 108 via a data link and/or communications system 112. Furthermore, practical embodiments of the aircraft system 100 and/or aircraft 102 will include numerous other devices and components for providing additional functions and features, as will be appreciated in the art. In this regard, it will be appreciated that although FIG. 1 shows a single display device 104, in practice, additional display devices may be present onboard the aircraft 102. Additionally, it should be noted that in other embodiments, features and/or functionality of processing system 108 described herein can be implemented by or otherwise integrated with the features and/or functionality provided by the display system 110 or the FMS 116, or vice versa. In other words, some embodiments may integrate the processing system 108 with the display system 110 or the FMS 116; that is, the processing system 108 may be a component of the display system 110 and/or the FMS 116.

In FIGS. 2A and 2B, are depicted an exemplary scenario of an aircraft in flight with a lateral route and vertical trajectory from a current aircraft 200 location to the desired runway. In the exemplary scenario depicted in FIGS. 2A-2B, different aircraft profiles are shown and include aircraft predicted altitude profile 220, an aircraft predicted speed profile 225, an aircraft expected ALT profile 230, an aircraft expected SPD profile 235, a VLE(knots) 240, and various fixed flap/slat Configurations 245. The scenario depicts an instance where the aircraft is flying high and fast, and the pilot must make use of the airbrakes, and speed brakes, and/or early FLAPS below VFE. If these operations are not sufficient, that is to achieve a flight path and speed to meet an approach stabilization criterion defined in the standard operating procedure, then the pilot may be required to execute an early use operation of the LG extension when the aircraft is below VFE.

The challenge here in the scenario depicted is that pilot would need to know the following information to efficiently use the LG extension as follows: (a) whether early use of the LG will cause a low altitude and low speed of the aircraft; (b) is it possible to maintain a particular path and speed once an amount of energy lost is restored; (c) when the use of the LG is impermissible as an airbrake, and (d) what is an optimal location for the LG extension, and (e) what us an excess fuel burn.

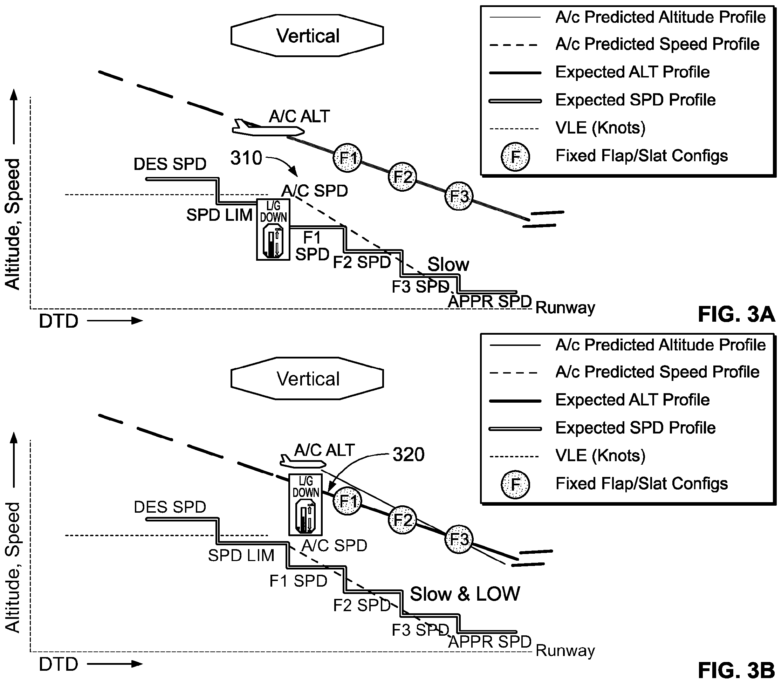

In another exemplary scenario depicted in FIG. 3A, in a vertical display shown, the challenges exist with the aircraft flying either on a required flight path but fast or in FIG. 3B at an appropriate speed but high. In both scenarios depicted in FIGS. 3A and 3B, early or non-optimal extension of the LG causes an abnormal energy situation. The challenges that the pilots incur, in both scenarios in FIGS. 3A-3B, are the pilot needs to know whether the early use of LG causes the aircraft to fly too low or too slow on the approach? is it possible for the aircraft to maintain a flight path and speed on approach if the energy situation is changed and restored? is it feasible to use the LG extension as an airbrake, in other words, can the pilot extend, then retract, and again extend the LG? what would be an optimal location (prediction location?) for the LG extension? and will there be an excess fuel burn for use of the LG extension.

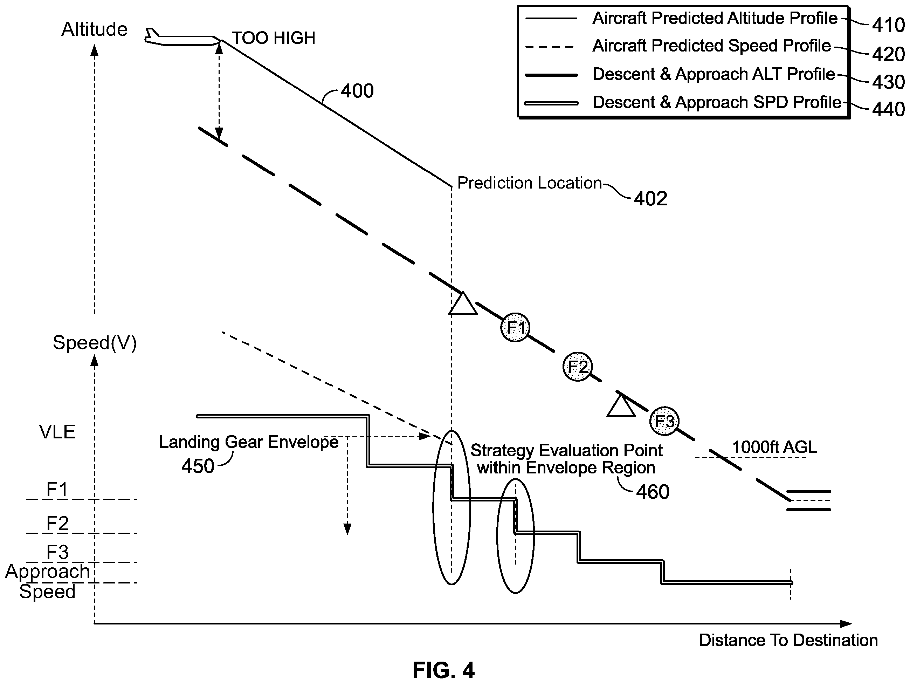

FIG. 4 depicts a reference vertical trajectory 400 to a runway where the aircraft comes in too high and exemplary modeling of the LG deployment in this scenario with applicable constraints in accordance with an embodiment. In FIG. 4, aircraft 400 is too high from the runway and has a flight angle to a prediction location 402. A reference flight path of a descent and approach altitude profile 430 is depicted that satisfies a 1000-foot above ground level (AGL) approach stabilization altitude criterion for maintaining a constant approach speed. In addition, the aircraft predicted altitude profile 410, the aircraft predicted speed profile 420, and the aircraft's descent and approach speed (SPD) profile 440 are shown.

The reference vertical trajectory (descent and approach ALT profile 430 depicted) also satisfies applicable altitude, airspeed, and/or descent rate criteria associated with the FAF, and potentially other navigational reference points associated with a given approach procedure that is traversed a lateral trajectory (not shown). Based on the current aircraft altitude and airspeed at the current aircraft location, in exemplary embodiments, the energy management display process calculates or otherwise determines a recommended prediction location 402 for effective LG extension within the landing gear envelope 450, and for intercepting the reference vertical trajectory at or before the applicable altitude criterion or constraint closest to the airport (e.g., the 1000 ft AGL stabilization altitude).

At the prediction location 402, within the landing gear envelope, the multiple strategies are evaluated within an envelope region for deploying the LG. The modeling strategy is based on certain reference parameters as follows: (1) altitude constraint, (2) speed constraint, (3) altitude and speed constraint, (4) 1000 ft AGL or 500 AGL or 300 AGL stabilization gate, (5) final approach, (6) initial approach fix (IAF) and the (7) pilot choice. The modeling may identify or otherwise determine a recommended vertical trajectory to the location of the 1000 ft AGL stabilization altitude based on the current aircraft altitude and airspeed, and then identify or otherwise determine one or more sequences of aircraft configuration changes (e.g., flap extension locations and extension positions, locations or distances for engaging the airbrake, and/or the like) modeled with LG extensions at evaluation points to reduce the energy of the aircraft to satisfy the constant approach speed at the location of the 1000 ft AGL stabilization altitude. The LG extensions are modeled at the various strategy evaluation points 460 within the envelope region 450.

The decelerate rate (that is model with the strategies at the evaluation points 460) available that satisfies the reference vertical trajectory at the prediction location 402 is equal to the speed at the evaluation point minus speed for the reference trajectory multiplied by the speed at the evaluation point plus the speed at the reference trajectory. This quantity is divided by twice the distance between the evaluation point and the reference point. The evaluation points are shown before flaps are deployed and after the first two sets of flaps are deployed.

Two sets of decelerate rates are calculated for the aircraft at the prediction location and include the decelerate available rate and the decelerate rate that is required at the prediction location.

The decelerate rate computation at the Current Prediction Location is expressed in the following functions:

$$\text{Decelerate_Rate_Available_at_Prediction_Location} = [\ (\text{SPD_at_Eval_Point} - \text{SPD_REF}) * (\text{SPD_at_Eval_Point} + \text{SPD_REF})] / [(2 * \text{Distance_Between_Eval_Point_And_REF_Point})].$$

Decelerate rate required at the prediction location is expressed in the function as follows:

$$\text{Decel_Rate_Required_at_Pred_Location} = [\ (\ \text{PRD_Speed_at_Eval_Point} - \text{SPD_REF}) * (\text{PRD_Speed_at_Eval_Point} + \text{SPD_REF})]/(2 * \text{Dist_Between_Eval_Point_And_REF_Point})$$

The sum of CONFx Deceleration Rate is as expressed as follows:

$$\text{Sum of CONFx Deceleration Rate} = [\ (\text{SPD_at_CONFx} - \text{SPD_REF}) * (\text{SPD_at_CONFx} + \text{SPD_REF})\ \text{J}\ \text{Decel_Rate_Available_at_CONFxs} = \text{SUM}\ [\quad \text{J}\ (2 * \text{Distance_Between_CONFx_And_REF_Point})$$

Where x= 1,2,3... s= sum of applicable the landing flags and flag configuration (CONFx).

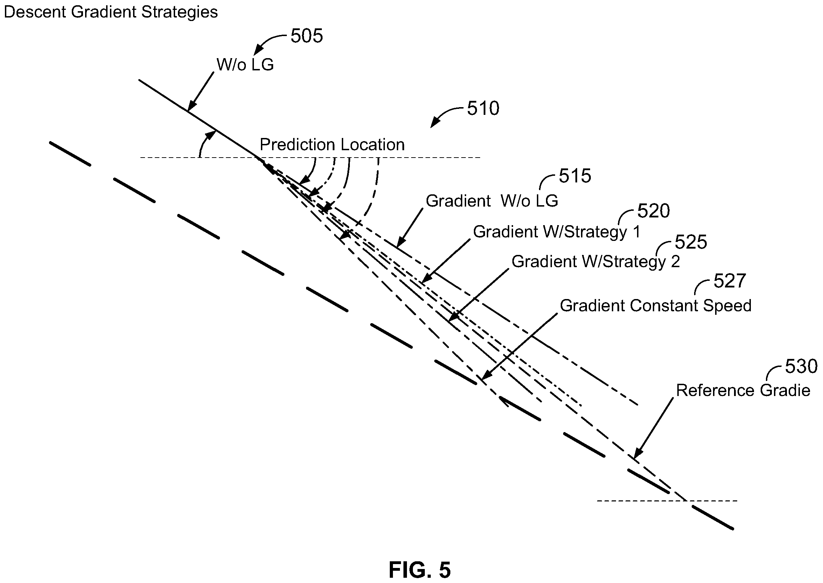

FIG. 5 illustrates a diagram of exemplary modeling of landing gear in a scenario of the 1000 ft AGL stabilization altitude that is used as a reference point in accordance with an embodiment. In FIG. 5, there is illustrates a prediction location 510 without landing gear 505 and various modeling of a gradient without landing gear 515, gradient with strategy "1" at 520, gradient with strategy "2" at 525, the gradient at constant speed 527, and reference gradient 530 before the 1000 ft AGL stabilization altitude.

The reference gradient 530 depicts a flight path angle that satisfies a 1000-foot above ground level (AGL) approach stabilization altitude criterion for maintaining a constant approach speed, and for comparing the other gradients without LG, with strategy 1, and with strategy 2 with the 1000 ft AGL criterion.

The deceleration rate strategies are as follows:

The Strategy "1" = LG extension at the current prediction location if the following condition is satisfied with: (the decelerate rate required at the prediction location is greater than (i.e., " >") the decelerate rate available at the prediction location), and then the decelerate rate required at the prediction location is greater than (i.e., ">") the decelerate rate available at the landing flaps and flag configurations (CONFxs).

The Strategy "2" = LG extension at landing flap and flap configuration (CONFx) if the following condition is satisfied ( Decelerate Rate Required at Prediction Location is less than (i.e., "<") the decelerate rate available at the prediction location) and then the (decelerate rate required at the prediction location is greater than (i.e., ">") the decelerate rate available at the CONFxs).

Where x= 1,2,3... s= sum of applicable CONFx

In the case of the gradient without landing gear is shallower than the reference gradient, there is a need for additional drag modeling. Two types of modeling show the additional drag of an "immediate" or "down path" model. The immediate model represents a gradient that is shallower than the reference gradient. The down path model represents a further gradient than the immediate gradient and is also steeper than the reference gradient.

In this case, there are three possible drag strategies illustrated in FIG. 5. for LG drag modeling.

A first strategy "A" of a Gradient w/Strategy "1" at 520 that is applicable for ALT and/or SPD and is captured at a current prediction location.

A second strategy "B" of a gradient with a strategy "2" at 525 that is applicable for ALT and/or SPD from captures from CONFx.

A third strategy "C" of a gradient with Constant Speed 527 that is applicable for ALT captures at the current prediction location or CONFx and is shown as a combination of the two decelerate strategies.

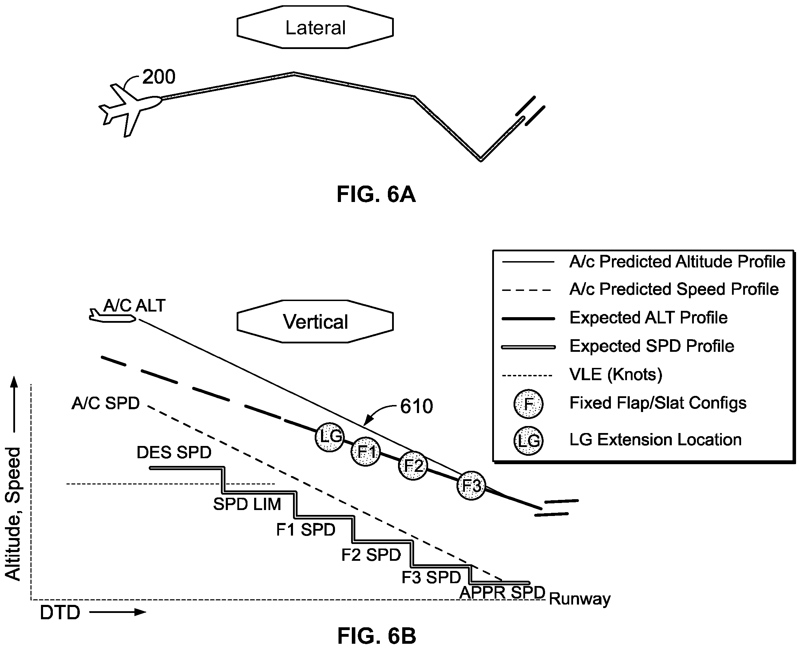

FIGS. 6A and 6B illustrate exemplary modeling of landing gear (LG) with the LG strategy 1 of a landing gear extension within a region and up the path of CONFx) in accordance with an exemplary embodiment. FIG. 6A illustrates the lateral path of the aircraft with the LG extension employing strategy 1. FIG. 6B illustrates the vertical path with LG extension at 610 employing strategy 1 with the LG extension shown in the expected SPD profile. In this case, a 1000 AGL is used as a reference point.

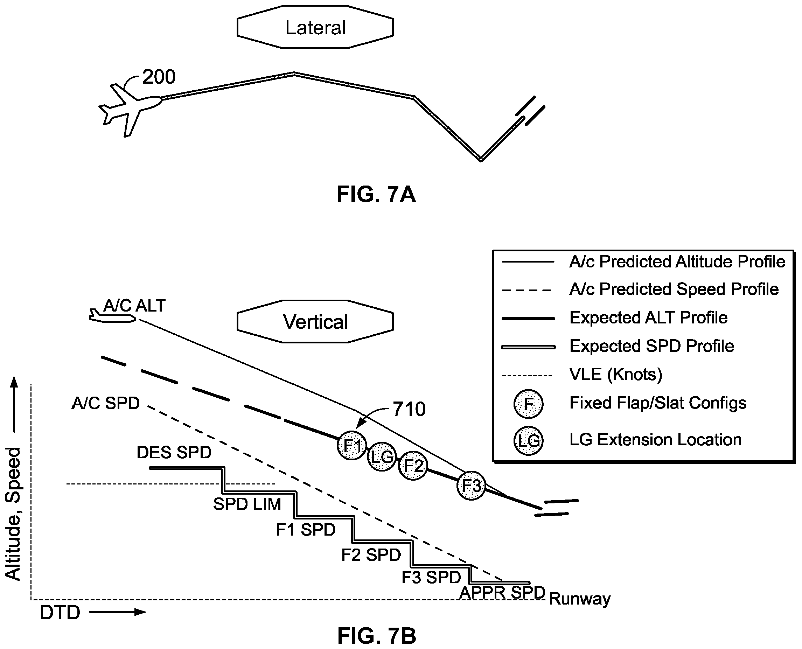

FIGS. 7A and 7B illustrate exemplary modeling of landing gear (LG) with the LG strategy 2 of a landing gear extension within a region and down path of the first CONF) in accordance with an exemplary embodiment. FIG. 7A illustrates the lateral path of the aircraft with the LG extension employing strategy 2. FIG. 7B illustrates the vertical path with LG extension at 710 employing strategy 2 with the LG extension shown in the expected SPD profile. In this case, a 1000 AGL is used as a reference point.

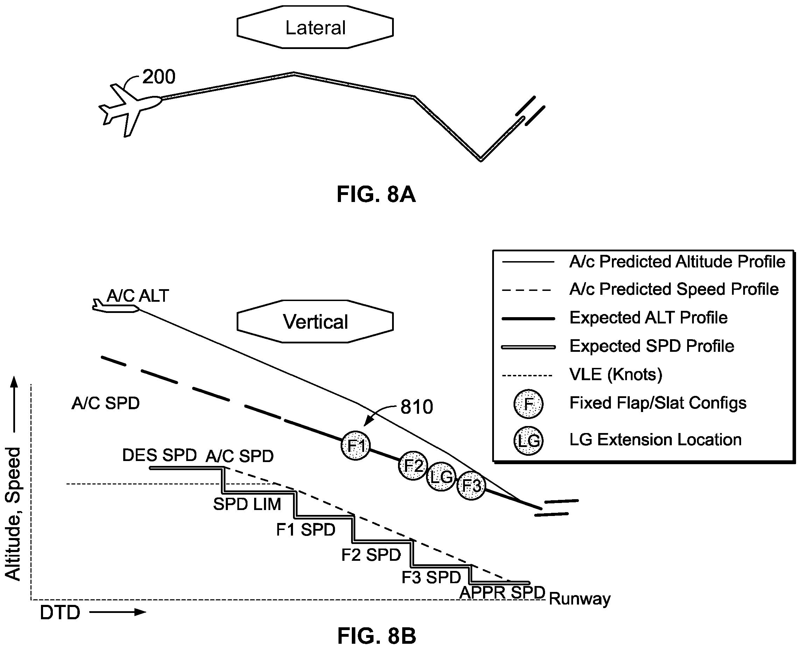

FIGS. 8A and 8B illustrate exemplary modeling of landing gear (LG) with the LG only ALT capture of landing gear extension within a region and down path of the second CONF in accordance with an exemplary embodiment. FIG. 8A illustrates the lateral path of the aircraft with the LG extension within a region and down the path of the second CONF. FIG. 8B illustrates the vertical path with LG extension at 810 within a region and down path of the second CONF shown in the expected ALT profile. In this case, a 1000 AGL is used as a reference point.

EXEMPLARY MODELING CASES WITH LG EXTENSION

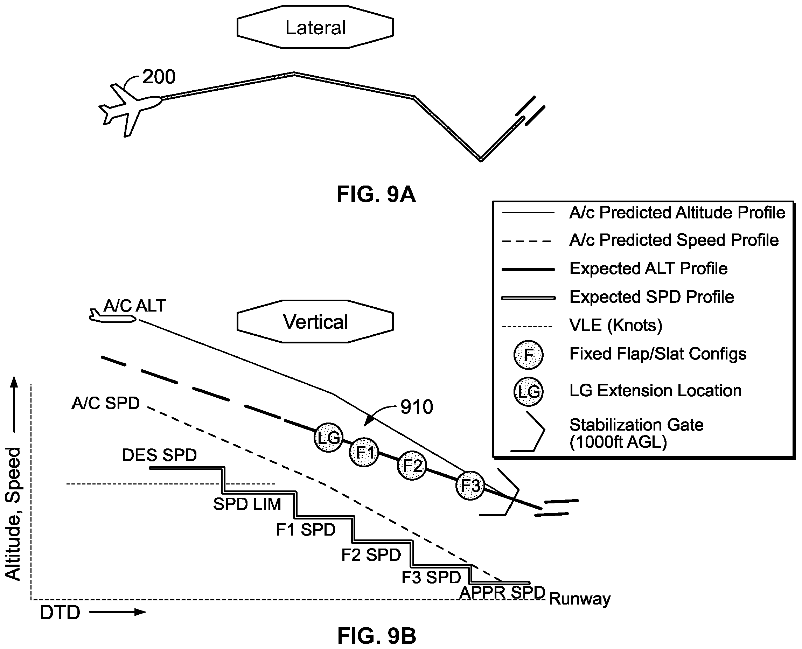

FIGS. 9A and 9B illustrate exemplary modeling of landing gear (LG) with effective and optimal LG extension and a case 1 of 1000 AGL approach stabilization gate adherence in accordance with an exemplary embodiment. FIG. 9A illustrates the lateral path of the aircraft with the effective LG extension. FIG. 9B illustrates the vertical path with effective LG extension at 910. In this case, a 1000 AGL is used as a reference point.

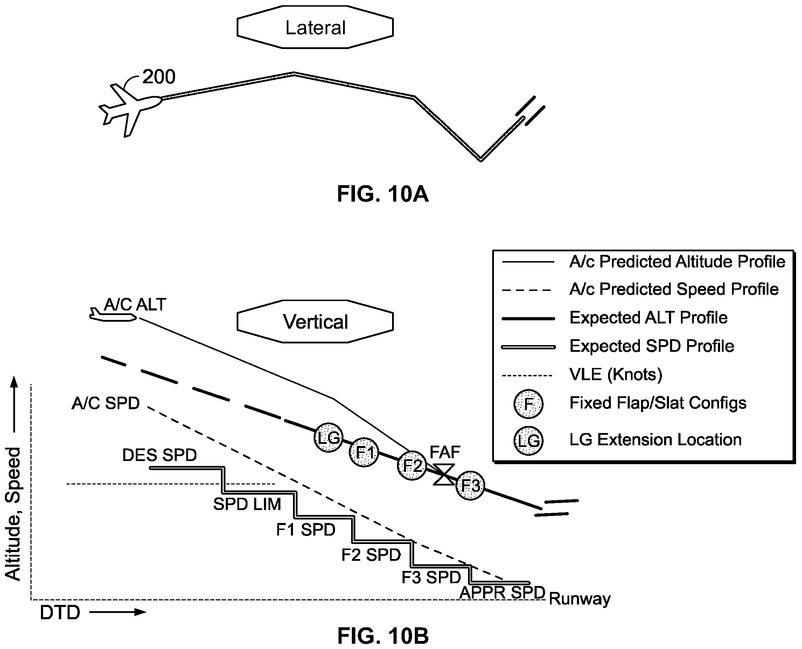

FIGS. 10A and 10B illustrate exemplary modeling of landing gear (LG) with effective and optimal LG extension and case 2 of final approach fix (FAF) ALT adherence in accordance with an exemplary embodiment. FIG. 10A illustrates the lateral path of the aircraft with the effective LG extension. FIG. 10B illustrates the vertical path with effective LG extension at 1010. In this case, FAF is used as a reference point.

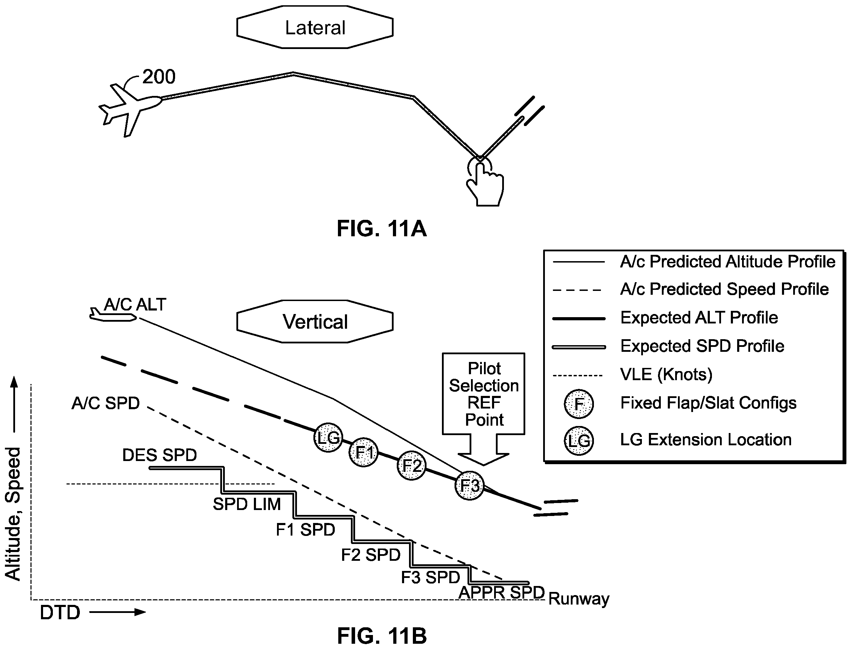

FIGS. 11A and 11B illustrate exemplary modeling of landing gear (LG) with effective and optimal LG extension and a case 3 of pilot navigation display (ND) interactivity in accordance with an exemplary embodiment. FIG. 11A illustrates the lateral path of the aircraft with the effective LG extension. FIG. 11B illustrates the vertical path with effective LG extension at pilot selection REF point 1110. In this case, the pilot selects a REF point 1110 that the pilot wants to know the aircraft's energy state. The selection can be touch selection shown in the lateral path.

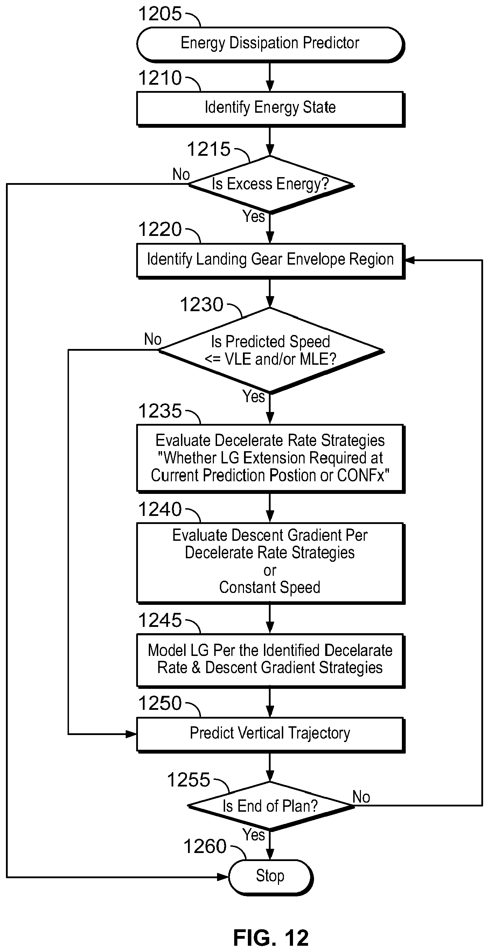

FIG. 12 illustrates an exemplary method of managing the energy of an aircraft in a landing trajectory when deploying landing gear in accordance with an embodiment. At step 1205, the system evaluates the energy state for the aircraft by initiating an energy dissipation predictor in accordance with a reference vertical trajectory.

At step 1210, the system evaluates the energy state of the aircraft based on computations of altitude, and speed with respect to a vertical trajectory formulated for the aircraft on the flight path in the approach phase.

The system may identify a desired flight path angle for descending to the airport, the desired descent rate, the desired thrust configuration for descent (e.g., idle descent), desired flap extension points or other aircraft configuration change points relative to the airport, and/or the like. In an exemplary embodiment, the reference vertical trajectory can be configured to comply with any applicable altitude, speed, and/or aircraft configuration constraints associated with the FAF at the corresponding location within the reference vertical trajectory. The reference vertical trajectory may be generated with a fixed flight path angle that satisfies a 1000-foot above ground level (AGL) approach stabilization altitude criterion for maintaining a constant approach. At step 1215, the system determines if there is an excess energy state for the aircraft based on a set of energy dissipation predictors for a selected aircraft trajectory. The computation is based on aircraft ALT and SPD with respect to an intended vertical profile. At step 1220 the system identifies an envelope region for deploying the landing gear at a current prediction position in the flight path (i.e., applicability at the aircraft location or Waypoint or Prediction intervals, etc.). At step 1220 the system computes rate strategies within the LG envelope and determines if the predicted speed is either at least less than a maximum landing gear deployment speed or at an operating aircraft speed at the current prediction position.

The system evaluates the set of multiple strategies (MLEs) to deploy the landing gear for the current prediction position. At step 1235, the system evaluates deceleration rate strategies by computing the first strategy by identifying a decelerate rate and a descent gradient of the aircraft on the flight path to deploy the landing gear for an effective or optimal LG extension modeling. At step 1240, the system evaluates a second strategy by designating a constant speed on the flight path to deploy the landing gear. At step 1245, the system models a deployment of the landing gear based on an identified decelerate rate associated with the first strategy. There are two models used for the LG extension modeling. The first is a model of an immediate deployment at the current prediction position including a shallower gradient than a reference gradient or with an identified deceleration rate in accordance with the first strategy which is greater than a current deceleration rate. The second is modeling a down path deployment at the current prediction position of a steeper gradient than a reference gradient or with an identified deceleration rate in accordance with the first strategy which less than a current deceleration rate.

At step 1250, the system upon establishing that the predicted speed is either at least less than a maximum landing gear deployment speed or at an operating aircraft speed for the current prediction position, predicts a vertical trajectory for deploying the landing gear in the flight path. The system then at 1255 determines if this is the end of the plan if not then iteratively identifies another landing gear envelope region and cycles through the prediction, evaluation, and modeling steps 1230 to 1250 again until a determination at step 1255 that the plan is completed. The system process also allows ND/VD interactivity to the crew to graphically select (or enter via FMS page) the reference point with respect to determining the energy state management in an effect of LG extension within permissible envelope/region of LG extension. The system process provides an effective LG extension indication "LG" for display on ND/VD/PFD/MCDU/MFD/PED or other display systems.

For the sake of brevity, conventional techniques related to approach procedures, aerodynamics, aircraft modeling, graphics and image processing, avionics systems, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected, additional intervening elements, devices, features, or components may be present in an embodiment of the depicted subject matter. In addition, certain terminology may also be used herein for the purpose of reference only, and thus are not intended to be limiting.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

**1.** A method to optimize managing energy of an aircraft in a landing trajectory when deploying landing gear, the method comprising:

evaluating an energy state for the aircraft for a set of flight trajectories, the set of flight trajectories comprising at least one of a lateral and a vertical trajectory for a flight path in an approach phase to a runway;
identifying at least one energy state for the aircraft based on a set of formulated computations based on an altitude and speed of a vertical aircraft profile on the flight path in the approach phase;
in response to computing excess energy of at least one energy state for the aircraft based on a set of energy dissipation predictors for a selected aircraft trajectory, assessing in an envelope region a landing gear extension to manage excess energy at a prediction location in the flight path; and

deploying the landing gear in accordance with the assessment to manage the excess energy at the prediction in the flight path in the approach phase to the runway.

**2.** The method of claim 1, further comprising:
in response to determining that a predicted speed is either at least less than a maximum landing gear extension speed or at an operating aircraft speed at the prediction location, evaluating at least one strategy of a plurality of strategies for the landing gear extension for a selected evaluation point.

**3.** The method of claim 2, further comprising:
evaluating a first strategy based on a computed decelerate rate and a descent gradient of the aircraft on the flight path with the landing gear extension at the selected evaluation point.

**4.** The method of claim 3, further comprising:
evaluating a second strategy on the descent gradient with a constant speed for the aircraft on the flight path with the landing gear extension at the selected evaluation point.

**5.** The method of claim 4, further comprising:

generating a model for the landing gear extension by the computed decelerate rate and the first strategy at an evaluation location; and
upon establishing that the predicted speed is either at least less than a maximum landing gear extension speed or at an operating aircraft speed for the prediction position, predicting a vertical trajectory for the landing gear extension in the flight path at the selected evaluation point.

**6.** The method of claim 5, further comprising:
generating a model for a vertical trajectory of the aircraft with an immediate landing gear extension at the prediction location wherein the immediate landing gear extension can cause a shallower gradient for the vertical trajectory than a reference gradient for the vertical trajectory that has a computed deceleration rate using the first strategy with a greater decelerate rate than a current deceleration rate.

**7.** The method of claim 6, further comprising:
generating modeling for a down path trajectory with a landing gear extension at the prediction location wherein the down path trajectory comprises a steeper gradient of a trajectory than a reference gradient of the trajectory with a deceleration rate using the first strategy with a lesser decelerate rate than a current deceleration rate.

**8.** An aircraft system comprising:

a display device;
a data storage element to maintain prediction location criteria;
a navigation system to provide a current location of an aircraft and a current heading of the aircraft;
a processing system coupled to the display device, the data storage element, and the navigation system configured to:

evaluate an energy state for the aircraft for a set of trajectories comprising at least one of a lateral and a vertical trajectory in route to the runway;
assess at least one energy state for the aircraft based on a set of formulated computations based on an altitude and speed of a vertical aircraft profile and an aircraft trajectory in route to the runway;
compute excess energy of at least one energy state for the aircraft based on a set of energy dissipation predictors for a selected aircraft trajectory;
identify an envelope region for a landing gear extension and assess a change in an aircraft energy state at a prediction location displayed in the display device in a flight path in route to the runway; and
in response to an identified envelope region for the landing gear extension, deploy an aircraft's landing gear at the prediction location to respond to an assessed change in the aircraft energy state in route to the runway.

**9.** The aircraft system of claim 8, the processing system further configured to:
in response to determining that a predicted speed is either at least less than a maximum landing gear extension speed or at an operating aircraft speed at the prediction location, evaluate at least one strategy of a plurality of strategies for the landing gear extension for a selected evaluation point.

**10.** The aircraft system of claim 9, the processing system further configured to:

evaluate a first strategy based on a computed decelerate rate and a descent gradient of the aircraft on the flight path with the landing gear extension at the selected evaluation point;
evaluate a second strategy on the descent gradient with a constant speed for the aircraft on the flight path with the landing gear extension at the selected evaluation point;
generate a model for the landing gear extension by the computed decelerate rate and the first strategy at an evaluation location; and
upon establishing that the predicted speed is either at least less than a maximum landing gear extension speed or at an operating aircraft speed for the prediction position, predict a vertical trajectory for the landing gear extension in the flight path at the selected evaluation point.

100
102
AIRCRAFT
104
DISPLAY DEVICE
106
USER INPUT DEVICE
108
PROCESSING SYSTEM
110
DISPLAY SYSTEM
112
COMMUNICATIONS SYSTEM
114
NAVIGATION SYSTEM
116
FMS
118
AVIONICS SYSTEM(S)
120
DETECTION SYSTEM(S)
122
DATABASE
124
DATA STORAGE ELEMENT

FIG. 1

Lateral
200
220
Vertical
210
A/C ALT
220
245
A/C SPD
DES SPD
240
SPD LIM
F1 SPD
F2 SPD
F3 SPD
APPR SPD
Runway
F1
F2
F3
225
235
Altitude, Speed
DTD
A/c Predicted Altitude Profile 220
A/c Predicted Speed Profile 225
Expected ALT Profile 230
Expected SPD Profile 235
VLE (Knots) 240
F
Fixed Flap/Slat Configs 245

FIG. 2A

FIG. 2B

Vertical
A/c Predicted Altitude Profile
A/c Predicted Speed Profile
Expected ALT Profile
Expected SPD Profile
VLE (Knots)
F
Fixed Flap/Slat Configs
A/C ALT
F1
F2
F3
DES SPD
310
A/C SPD
SPD LIM
L/G DOWN
F1 SPD
F2 SPD
Slow
F3 SPD
APPR SPD
Runway
Altitude, Speed
DTD

FIG. 3A

Vertical
A/c Predicted Altitude Profile
A/c Predicted Speed Profile
Expected ALT Profile
Expected SPD Profile
VLE (Knots)
F
Fixed Flap/Slat Configs
A/C ALT
320
L/G DOWN
F1
F2
F3
DES SPD
A/C SPD
SPD LIM
F1 SPD
Slow & LOW
F2 SPD
F3 SPD
APPR SPD
Runway
Altitude, Speed
DTD

FIG. 3B

Aircraft Predicted Altitude Profile
410
Aircraft Predicted Speed Profile
420
Descent & Approach ALT Profile
430
Descent & Approach SPD Profile
440
Altitude
TOO HIGH
400
Prediction Location
402
F1
F2
F3
1000ft AGL
Speed(V)
VLE
F1
F2
F3
Approach Speed
Landing Gear Envelope
450
Strategy Evaluation Point within Envelope Region
460
Distance To Destination


FIG. 4

Descent Gradient Strategies
W/o LG
505
510
Prediction Location
Gradient W/o LG
515
Gradient W/Strategy 1
520
Gradient W/Strategy 2
525
Gradient Constant Speed
527
Reference Gradie
530

FIG. 5

Lateral
200
Vertical
610
A/c Predicted Altitude Profile
A/c Predicted Speed Profile
Expected ALT Profile
Expected SPD Profile
VLE (Knots)
Fixed Flap/Slat Configs
LG Extension Location
F
LG
A/C ALT
A/C SPD
DES SPD
SPD LIM
F1 SPD
F2 SPD
F3 SPD
APPR SPD
Runway
F1
F2
F3
DTD
Altitude, Speed


FIG. 6A

FIG. 6B

Lateral
200
Vertical
A/c Predicted Altitude Profile
A/c Predicted Speed Profile
Expected ALT Profile
Expected SPD Profile
VLE (Knots)
F Fixed Flap/Slat Configs
LG LG Extension Location
710
A/C ALT
A/C SPD
DES SPD
SPD LIM
F1 SPD
F2 SPD
F3 SPD
APPR SPD
Runway
F1
LG
F2
F3
DTD
Altitude, Speed

FIG. 7A

FIG. 7B

Lateral
200
Vertical
810
A/c Predicted Altitude Profile
A/c Predicted Speed Profile
Expected ALT Profile
Expected SPD Profile
VLE (Knots)
Fixed Flap/Slat Configs
LG Extension Location
F
LG
A/C ALT
A/C SPD
DES SPD
A/C SPD
SPD LIM
F1 SPD
F2 SPD
F3 SPD
APPR SPD
Runway
F1
F2
LG
F3
DTD
Altitude, Speed

FIG. 8A

FIG. 8B

Lateral
200
Vertical
A/c Predicted Altitude Profile
A/c Predicted Speed Profile
Expected ALT Profile
Expected SPD Profile
VLE (Knots)
Fixed Flap/Slat Configs
LG Extension Location
Stabilization Gate (1000ft AGL)
F
LG
910
A/C ALT
A/C SPD
DES SPD
SPD LIM
F1 SPD
F2 SPD
F3 SPD
APPR SPD
Runway
F1
F2
F3
DTD
Altitude, Speed

FIG. 9A

FIG. 9B

Lateral
200
Vertical
A/C ALT
A/C SPD
DES SPD
SPD LIM
F1 SPD
F2 SPD
F3 SPD
APPR SPD
Runway
LG
F1
F2
FAF
F3
A/c Predicted Altitude Profile
A/c Predicted Speed Profile
Expected ALT Profile
Expected SPD Profile
VLE (Knots)
F
Fixed Flap/Slat Configs
LG
LG Extension Location
DTD
Altitude, Speed

FIG. 10A

FIG. 10B

Lateral
200
Vertical
A/C ALT
A/C SPD
DES SPD
SPD LIM
F1 SPD
F2 SPD
F3 SPD
APPR SPD
Runway
LG
F1
F2
F3
Pilot Selection REF Point
A/c Predicted Altitude Profile
A/c Predicted Speed Profile
Expected ALT Profile
Expected SPD Profile
VLE (Knots)
F
Fixed Flap/Slat Configs
LG
LG Extension Location
Altitude, Speed
DTD

FIG. 11A

FIG. 11B

1205
Energy Dissipation Predictor
1210
Identify Energy State
1215
Is Excess Energy?
No
Yes
1220
Identify Landing Gear Envelope Region
1230
Is Predicted Speed
<= VLE and/or MLE?
No
Yes
1235
Evaluate Decelerate Rate Strategies
"Whether LG Extension Required at
Current Prediction Postion or CONFx"
1240
Evaluate Descent Gradient Per
Decelerate Rate Strategies
or
Constant Speed
1245
Model LG Per the Identified Decelarate
Rate & Descent Gradient Strategies
1250
Predict Vertical Trajectory
1255
Is End of Plan?
No
Yes
1260
Stop

FIG. 12

Europäisches
Patentamt
European
Patent Office
Office européen
des brevets

# EUROPEAN SEARCH REPORT

Application Number
EP 22 15 5181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/026299 A1 (CONSTANS FLORIAN [FR] ET AL) 31 January 2013 (2013-01-31)<br>* paragraph [0003] *<br>* paragraph [0016] *<br>* claims 1, 2, 6, 7 *<br>----- | 1-10 | INV.<br>G08G5/00<br>G05D1/06<br>G08G5/02 |

TECHNICAL FIELDS SEARCHED (IPC)

G08G
G05D

The present search report has been drawn up for all claims

1

| Place of search | Date of completion of the search | Examiner |
|---|---|---|
| The Hague | 7 July 2022 | Renaudie, Cécile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 15 5181

This annex lists the patent family members relating to the patent documents cited in the above-mentioned European search report. The members are as contained in the European Patent Office EDP file on
The European Patent Office is in no way liable for these particulars which are merely given for the purpose of information.

07-07-2022

| Patent document cited in search report | Publication date | Patent family member(s) | Publication date |
|---|---|---|---|
| US 2013026299 A1 | 31-01-2013 | CN 102897313 A | 30-01-2013 |
| | | FR 2978588 A1 | 01-02-2013 |
| | | US 2013026299 A1 | 31-01-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- IN 202111007737
- US 20130218374 A
- US 9646503 B2
- US 10654589 B2